(19) **Europäisches Patentamt European Patent Office Office européen des brevets**

(11) **EP 4 449 173 B1**

(12) **FASCICULE DE BREVET EUROPEEN**

(45) Date de publication et mention de la délivrance du brevet:
**17.12.2025 Bulletin 2025/51**

(21) Numéro de dépôt: **22835343.9**

(22) Date de dépôt: **09.12.2022**

(51) Classification Internationale des Brevets (IPC):
*G02B 6/124* (2006.01)    *G02B 27/00* (2006.01)
*G02F 1/29* (2006.01)    *G02F 1/295* (2006.01)
*G02B 6/34* (2006.01)    *G02B 6/12* (2006.01)
*G02B 5/18* (2006.01)

(52) Classification Coopérative des Brevets (CPC):
**G02B 6/124; G02B 5/1861; G02B 6/34; G02B 27/0087; G02F 1/2955;** G02B 2006/12061; G02B 2006/12107

(86) Numéro de dépôt international:
**PCT/EP2022/085254**

(87) Numéro de publication internationale:
**WO 2023/110684 (22.06.2023 Gazette 2023/25)**

(54) **EMETTEUR OPTOELECTRONIQUE A ANTENNE RESEAU A COMMANDE DE PHASE OU CHAQUE ANTENNE OPTIQUE PRESENTE UNE LARGE SURFACE D'EMISSION**

OPTOELEKTRONISCHER SENDER MIT PHASENGITTERANTENNENGRUPPE UND GROSSER EMISSIONSFLÄCHE FÜR JEDE OPTISCHE ANTENNE

PHASED-GRATING-ANTENNA-ARRAY OPTOELECTRONIC EMITTER IN WHICH EACH OPTICAL ANTENNA HAS A LARGE EMISSION AREA

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **13.12.2021 FR 2113381**

(43) Date de publication de la demande:
**23.10.2024 Bulletin 2024/43**

(73) Titulaire: **Commissariat à l'Energie Atomique et aux Energies Alternatives
75015 Paris (FR)**

(72) Inventeurs:
• **GUERBER, Sylvain**
  **38054 GRENOBLE CEDEX 09 (FR)**
• **FOWLER, Daivid**
  **38054 GRENOBLE CEDEX 09 (FR)**
• **VIROT, Leopold**
  **38054 Grenoble cedex 09 (FR)**

(74) Mandataire: **INNOV-GROUP**
  **209 Avenue Berthelot**
  **69007 Lyon (FR)**

(56) Documents cités:
**CN-A- 111 679 529    US-A1- 2020 348 466**
**US-A1- 2021 293 934**

• INOUE ET AL.: "Démonstration of a new optical scanner using silicon photonics integrated circuit", OPT. EXPRESS, vol. 27, no. 3, 2019, pages 2499 - 2508, XP002807046

## Description

### DOMAINE TECHNIQUE

Le domaine de l'invention est celui des émetteurs optoélectroniques de type à antenne réseau à commande de phase réalisés de préférence sur une puce photonique de type photonique sur silicium. L'invention trouve une application notamment dans le domaine des LIDAR (*Light Detection and Ranging,* en anglais).

### ÉTAT DE LA TECHNIQUE ANTÉRIEURE

Les émetteurs optoélectroniques à antenne réseau à commande de phase (OPA, pour *Optical Phased Array*, en anglais) sont des dispositifs optoélectroniques permettant d'émettre en espace libre un rayonnement lumineux, monochromatique, de manière directionnelle. Ils trouvent une application notamment dans le domaine de la détection et de l'estimation d'une distance par laser (LIDAR), mais également dans le domaine des communications optiques en espace libre, des écrans holographiques et de l'imagerie médicale.

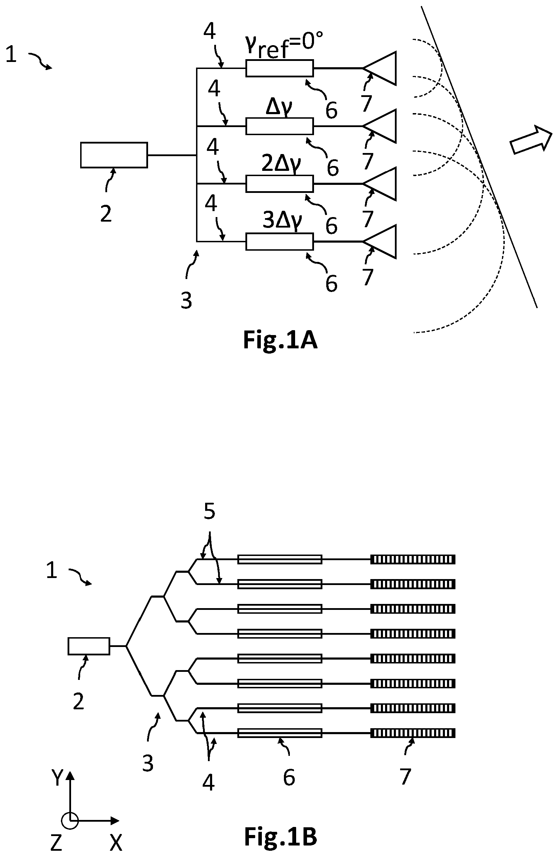

La figure 1A illustre de manière schématique le principe de fonctionnement d'un tel émetteur optoélectronique 1. Une source laser 2 émet un signal optique qui est distribué par un diviseur de puissance 3 dans des bras 4 de l'émetteur optoélectronique 1. Chaque bras 4 comporte un déphaseur 6, et un émetteur élémentaire 7 également appelé antenne optique. Chaque antenne optique 7 émet un signal optique en espace libre, par exemple par diffraction, les signaux optiques se combinant ensuite par interférence pour former un rayonnement lumineux. Celui-ci présente un diagramme d'émission en champ lointain déterminé notamment par la phase relative $\Delta\gamma$ appliquée par les déphaseurs 6 aux signaux optiques se propageant dans les bras 4.

De tels émetteurs optoélectroniques peuvent être réalisés en photonique intégrée, c'est-à-dire que ses différents composants optiques (guides d'onde, diviseur de puissance, antennes optiques...) sont réalisés sur et à partir d'une même puce photonique. A ce titre, la figure 1B illustre de manière schématique et partielle un exemple d'un tel émetteur optoélectronique 1 décrit dans l'article de Hulme et al. intitulé Fully integrated hybrid silicon two dimensional beam scanner, Opt. Express 23 (5), 5861-5874 (2015). Cet émetteur optoélectronique 1 comporte une source laser 2, ici de type III-V, et est réalisé sur une même puce photonique. Il comporte donc, outre la source laser 2 à semiconducteur, le diviseur de puissance 3, des guides d'onde dits d'injection 5 (formant les bras 4), les déphaseurs 6 et les antennes optiques 7 situées dans les bras 4. Dans cet exemple, la source laser 2 est réalisée par report, sur la puce photonique (de type SOI), d'un matériau III-V suivi d'une structuration de celui-ci pour former le milieu à gain.

L'article de Inoue et al. intitulé Demonstration of a new optical scanner using silicon photonics integrated circuit, Opt. Express 27(3), 2499-2508 (2019) décrit un exemple d'émetteur optoélectronique comportant un réseau périodique bidimensionnel d'antennes optiques qui comportent chacune une grande surface d'émission en espace libre. Plus précisément, chaque antenne optique est formée d'un guide d'onde d'injection, d'une structure guidante à émission verticale formée d'un guide d'onde plus large que le guide d'onde d'injection et d'un réseau de diffraction verticale, et d'une structure de couplage formée d'un guide d'onde évasé (taper) et assurant le couplage optique entre le guide d'onde d'injection et la structure guidante à émission verticale. Une telle configuration d'antenne optique se retrouve notamment dans l'article de Mekis et al. intitulé A Grating-Coupler-Enabled CMOS Photonics Platform, IEEE Journal of Selected Topics in Quantum Electronics, vol. 17, no. 3, pp. 597-608, May-June 2011.

Cependant, il existe un besoin de disposer d'un émetteur optoélectronique dont les antennes optiques présentent une plus grande surface d'émission, de manière à réduire la divergence en champ lointain du rayonnement lumineux émis.

### EXPOSÉ DE L'INVENTION

L'invention a pour objectif de remédier au moins en partie aux inconvénients de l'art antérieur, et plus particulièrement de proposer un émetteur optoélectronique à antenne réseau à commande de phase dont les antennes optiques présentent une grande surface d'émission du rayonnement lumineux en espace libre, réduisant ainsi la divergence en champ lointain du rayonnement lumineux émis.

Pour cela, l'objet de l'invention est un émetteur optoélectronique à antenne réseau à commande de phase, comportant : un diviseur, destiné à être couplé à une source laser; une pluralité de guides d'onde dits d'injection, couplés au diviseur et s'étendant suivant un axe longitudinal dans un plan principal, formant les bras de l'émetteur optoélectronique ; une pluralité de déphaseurs et d'antennes optiques disposés dans les bras.

Chaque antenne optique comporte : le guide d'onde d'injection ; et une structure guidante dite à émission verticale, destinée à recevoir un mode optique provenant du guide d'onde d'injection, et formée d'un guide d'onde dit d'émission de largeur supérieure à celle du guide d'onde d'injection, et d'un réseau de diffraction verticale, couplé au guide d'onde d'émission et adapté à extraire en espace libre un mode optique circulant dans le guide d'onde d'émission.

**EP 4 449 173 B1**

Selon l'invention, chaque antenne optique comporte également une structure guidante dite à émission horizontale, formée du guide d'onde d'injection, et d'un réseau de diffraction latérale, couplé au guide d'onde d'injection et adapté à extraire, dans le plan principal et en direction du guide d'onde d'émission, un mode optique circulant dans le guide d'onde d'injection.

Certains aspects préférés mais non limitatifs de cet émetteur optoélectronique sont les suivants.

L'émetteur optoélectronique peut comporter une structure de couplage formée d'un milieu à gradient d'indice, située entre la structure guidante à émission horizontale et la structure guidante à émission verticale, et adaptée à assurer un couplage optique entre le réseau de diffraction latérale et le guide d'onde d'émission.

Le structure de couplage peut comporter un réseau de coupleurs élémentaires agencés latéralement en regard du réseau de diffraction latérale, et présente des dimensions transversales inférieures à une longueur d'onde principale du mode optique émis par la source laser ; ou peut être formée d'un milieu d'un premier indice de réfraction dans lequel sont situées des ouvertures de dimensions transversales inférieures à une longueur d'onde principale du mode optique émis par la source laser et remplies par un milieu d'un deuxième indice de réfraction inférieur au premier indice.

La structure de couplage peut présenter une longueur $l_{sc}$ inférieure ou égale à sa largeur totale $w_{tot,sc}$.

Le guide d'onde d'émission et le réseau de diffraction verticale peuvent présenter respectivement des largeurs $w_{ge}$ et $w_{tot,rv}$ au moins égales à une largeur totale $w_{tot,sc}$ de la structure de couplage.

Les antennes optiques peuvent être agencées périodiquement avec un pas $\Lambda_{a,y}$ suivant un axe orthogonal à l'axe longitudinal des guides d'onde d'injection, le réseau de diffraction verticale présentant une longueur totale dite d'extraction $l_{tot,rv}$ supérieure ou égale à 50% ou à 80%, du pas $\Lambda_{a,y}$.

Les antennes optiques peuvent être agencées périodiquement avec un pas $\Lambda_{a,x}$ suivant l'axe longitudinal des guides d'onde d'injection, le réseau de diffraction verticale présentant une largeur $w_{tot,rv}$ supérieure ou égale à 50% ou à 80%, du pas $\Lambda_{a,x}$.

Le réseau de diffraction latérale peut être adapté à extraire le mode optique selon un angle d'émission $\varphi_{rl}$ par rapport à un axe situé dans le plan principal et orthogonal à l'axe longitudinal du guide d'onde d'injection, la structure guidante à émission verticale étant agencée suivant un axe longitudinal parallèle à l'angle d'émission $\varphi_{rl}$ ainsi que la structure de couplage le cas échéant.

Le réseau de diffraction latérale peut présenter une longueur dite d'extraction $l_{tot,rl}$ supérieure à une largeur du guide d'onde d'injection. Le guide d'onde d'émission peut présenter une largeur $w_{ge}$ au moins égale à la longueur d'extraction $l_{tot,rl}$ du réseau de diffraction latérale, et le cas échéant la structure de couplage peut présenter une largeur $w_{sc}$ au moins égale à la longueur d'extraction $l_{tot,rl}$.

Le guide d'onde d'injection peut présenter une largeur inférieure ou égale à 1 μm, et le guide d'onde d'émission et le réseau de diffraction verticale peuvent présenter respectivement des largeurs supérieures ou égales à 10 μm.

Le réseau de diffraction verticale peut présenter une longueur totale dite d'extraction $l_{tot,rv}$ supérieure ou égale à 10 μm.

Le réseau de diffraction latérale peut être formé d'échancrures périodiques réalisées dans le guide d'onde d'injection, ou peut être formé de plots périodiques situés à distance du guide d'onde d'injection.

Le guide d'onde d'injection peut présenter une variation longitudinale d'au moins un paramètre représentatif de sa largeur selon une fonction p prédéfinie, et le réseau de diffraction latérale présente une variation longitudinale d'un pas $\Lambda_{rl}$ d'agencement de structurations périodiques selon une fonction q prédéfinie, les fonctions p et q étant prédéfinies en fonction d'un profil d'émission cible en champ lointain $S_{rl,c}(x)$ prédéfini d'un rayonnement lumineux extrait par le réseau de diffraction latérale et d'un angle d'émission cible $\varphi_{rl,c}$ prédéfini.

Le réseau de diffraction verticale peut présenter une variation longitudinale d'au moins un paramètre dimensionnel de structurations périodiques selon une fonction prédéfinie en fonction d'un profil d'émission cible en champ lointain $Srv_{,c}(x)$ prédéfini d'un rayonnement lumineux extrait par le réseau de diffraction verticale et d'un angle d'émission cible $\varphi_{rv,c}$ prédéfini.

L'émetteur optoélectronique peut comporter une puce photonique de type SOI dans laquelle sont situées la structure guidante à émission latérale, la structure de couplage le cas échéant, et la structure guidante à émission verticale.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1A, déjà décrite, est une vue schématique et partielle d'un émetteur optoélectronique à antenne réseau à commande de phase selon un exemple de l'art antérieur;

3

la figure 1B, déjà décrite, est une vue de dessus, schématique et partielle, d'un tel émetteur optoélectronique réalisé en photonique intégré selon un exemple de l'art antérieur;

la figure 2 est une vue de dessus, schématique et partielle, d'un émetteur optoélectronique selon un mode de réalisation, où les antennes optiques sont agencées suivant un réseau périodique bidimensionnel et présente chacune une grande surface d'émission en espace libre ;

les figures 3A et 3B sont des vues schématiques et partielles, en vue de dessus (fig.3A) et en coupe (fig.3B) d'une antenne optique d'un émetteur optoélectronique selon un mode de réalisation ;

la figure 3C est une vue de dessus, schématique et partielle, d'une antenne optique d'un émetteur optoélectronique selon un autre mode de réalisation où la structure de couplage et la structure guidante à émission verticale sont alignées suivant un axe longitudinal $A_L$ défini par l'angle d'émission $\varphi_{rl}$ non nul du réseau de diffraction latérale ;

la figure 4A est une vue en coupe, schématique et partielle, d'une antenne optique d'un émetteur optoélectronique selon un autre mode de réalisation, où la structure guidante à émission latérale, la structure de couplage et la structure guidante à émission verticale sont réalisées à partir d'une couche mince et partage une même sous-couche continue (base, *slab* en anglais) ;

les figures 4B à 4D sont des vues de dessus, schématiques et partielles, de différents exemples de guide d'onde d'injection d'une structure guidante à émission latérale d'une antenne optique ;

les figures 5A à 5C sont des vues de dessus, schématiques et partielles, d'antennes optiques illustrant différents exemples de la structure de couplage entre la structure guidante à émission latérale et la structure guidante à émission verticale ;

la figure 6A est un organigramme illustrant des étapes d'un procédé de dimensionnement et de fabrication d'une antenne optique d'un émetteur optoélectronique selon un mode de réalisation, où la structure guidante à émission latérale est apodisée ;

la figure 6B est une vue en coupe, schématique et partielle, d'une antenne optique d'un émetteur optoélectronique selon un autre mode de réalisation, où le réseau de diffraction verticale de la structure guidante à émission verticale est apodisé.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur un émetteur optoélectronique à antenne réseau à commande de phase, comportant un réseau d'antennes optiques. Les antennes optiques sont de préférence réalisées sur une puce photonique de type photonique sur silicium. L'émetteur optoélectronique est adapté à émettre un rayonnement lumineux présentant un profil d'émission en champ lointain prédéfini, par exemple constant ou gaussien, orienté selon un angle d'émission prédéfini, et peu divergeant au moins dans un plan vertical parallèle aux antennes optiques.

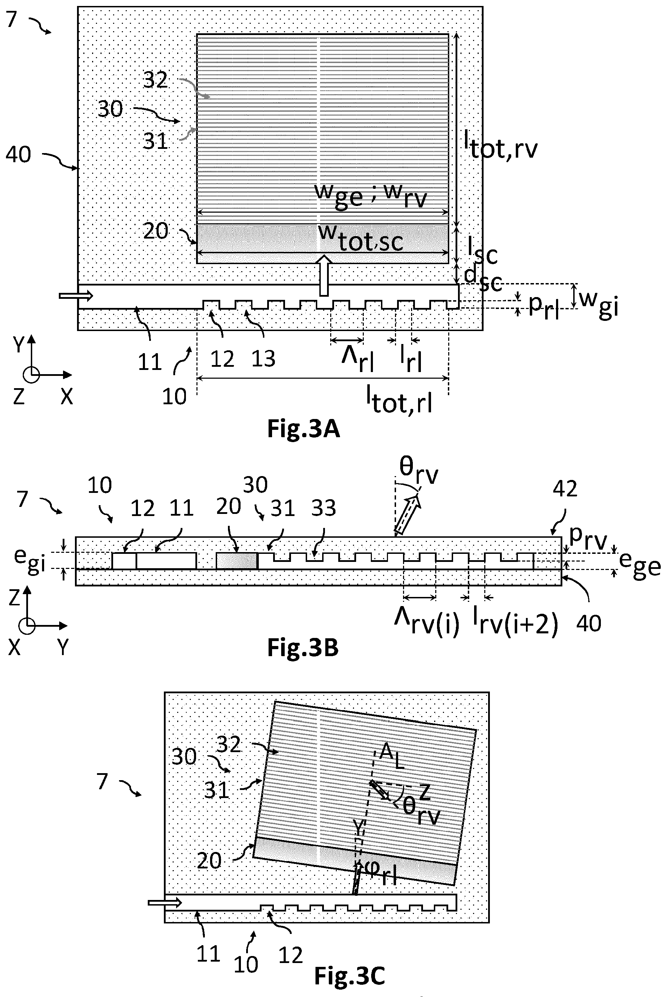

Un profil d'émission en champ lointain est la répartition angulaire de l'intensité du rayonnement lumineux en champ lointain émis par l'émetteur optoélectronique, autour d'un axe principal orienté suivant l'angle d'émission. Le champ lointain (ou zone de Fraunhofer) correspond à une distance D supérieure au rapport entre le carré d'une grande dimension de l'antenne optique (par exemple sa longueur $L_{tot,rl}$ de la structure guidante d'émission horizontale : fig.3A) sur la longueur d'onde $\lambda$ du rayonnement lumineux, et plus précisément : $D > 2L_{tot,rl}^2/\lambda$.

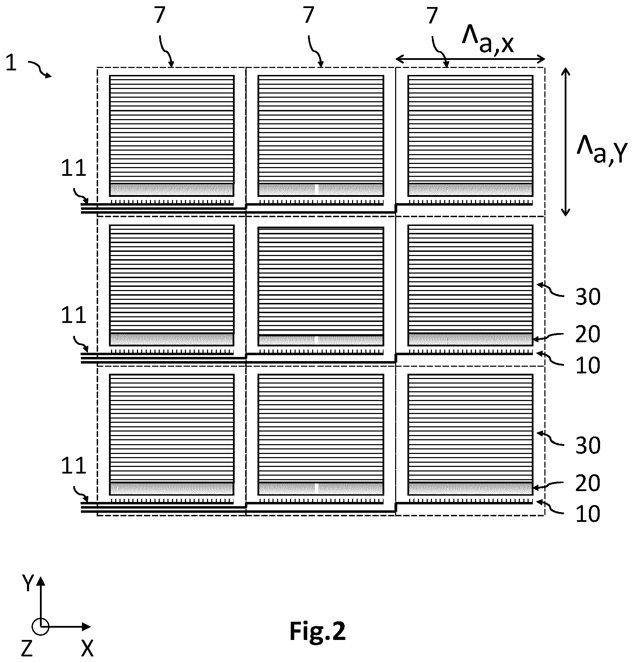

La figure 2 est une vue de dessus, schématique et partielle, d'un émetteur optoélectronique 1 selon un mode de réalisation. Celui-ci comporte, d'une manière générale, une source laser 2, un diviseur de puissance 3 et une pluralité de bras 4, comportant des déphaseurs 6 et des antennes optiques 7.

Selon l'invention, chaque antenne optique 7 comporte :

○ une structure guidante 10 à émission horizontale (i.e. dans le plan XY), formée d'un guide d'onde dit d'injection 11 (référencés '5' sur la fig.1B) et d'un réseau à diffraction latérale 12 adapté à extraire un mode optique dans le plan XY suivant un angle d'émission $\varphi_{rl}$ vis-à-vis de l'axe Y ;

∘ une structure guidante 30 à émission verticale (i.e. suivant une direction sensiblement parallèle à l'axe Z), couplée à la structure guidante 10 à émission verticale, et formée d'un guide d'onde dit d'émission 31 et d'un réseau à diffraction verticale 32 adapté à extraire un mode optique suivant un angle d'émission $\theta_{rv}$ vis-à-vis de l'axe Z.

On définit ici et pour la suite de la description un repère direct orthonormé XYZ, où le plan XY est parallèle au plan de la puce photonique, l'axe X étant orienté suivant l'axe longitudinal des structures guidantes 10 à émission horizontale des antennes optiques 7, et où l'axe Z étant orienté vers l'espace libre dans lequel le rayonnement lumineux est émis par l'émetteur optoélectronique 1. Les termes « inférieur » et « supérieur » sont relatifs à un éloignement vis-à-vis d'un substrat support suivant la direction +Z.

Dans ce mode de réalisation, l'émetteur optoélectronique 1 est intégré sur une puce photonique, par exemple dans le cadre de la technologie dite photonique sur silicium. La puce photonique, également appelée circuit intégré photonique (PIC, pour *Photonic Integrated Circuit*, en anglais), comporte un substrat support à partir duquel peuvent être réalisés des composants photoniques actifs (modulateurs, diodes...) et passifs (guides d'onde, multiplexeurs ou démultiplexeurs...) couplés optiquement les uns aux autres. Dans le cadre de la photonique sur silicium, le substrat support et les composants photoniques sont réalisés à base de silicium. La puce photonique peut ainsi être de type SOI (*Silicon On Insulator*, en anglais). Ainsi, dans cet exemple, les structures 10, 20, 30 sont en silicium. Toutefois, de nombreuses autres plateformes technologiques peuvent être utilisées selon les applications visées et la longueur d'onde du rayonnement lumineux. Ainsi, on pourra réaliser les guides d'onde par exemple en nitrure de silicium (SiN), en nitrure d'aluminium (AlN), en silice dopée, etc...

L'émetteur optoélectronique 1 comporte une source laser 2 adaptée à émettre un signal optique monochromatique pulsé ou continu, de longueur d'onde $\lambda$. La longueur d'onde peut être, à titre illustratif, égale à 1550nm. La source laser 2 peut être accordable en longueur d'onde, notamment pour modifier l'angle d'émission $\theta_{rv}$ que forme le rayonnement lumineux émis par les antennes optiques 7 vis-à-vis de l'axe vertical Z dans le plan YZ, ou dans un plan $A_L Z$ parallèle à l'axe vertical Z et à l'axe longitudinal $A_L$ (cf. fig.3C). Une modification de la longueur d'onde induirait également une variation de l'angle $\varphi_{rl}$. La source laser 2 peut être une source hybride formée d'un milieu à gain réalisé à base d'un composé III/V et collé à la surface de la puce photonique. Des réflecteurs optiques de type miroirs de Bragg peuvent ainsi être réalisés dans un guide d'onde intégré et couplé au milieu à gain. En variante, la puce photonique peut ne pas comporter la source laser 2, celle-ci étant alors être déportée et donc non assemblée sur la surface de la puce photonique. Elle peut alors être couplée à un guide d'onde intégré de la puce photonique, notamment par un coupleur à réseau.

Un diviseur de puissance 3 est couplé à la sortie de la source laser 2. Il comporte ainsi une entrée et une pluralité de sorties couplées chacune à un guide d'onde de l'émetteur optoélectronique 1. Le nombre de guides d'onde dit d'injection 11 correspond aux nombres de bras 4 de l'émetteur optoélectronique 1. Dans cet exemple, le diviseur de puissance 3 est formé de plusieurs diviseurs de type MMI (*Multimode Interferometer*, en anglais) agencés en cascade, mais d'autres types de composants optiques peuvent être utilisés (par ex. coupleurs directionnels, jonctions Y, coupleurs en étoile...).

L'émetteur optoélectronique 1 comporte une pluralité de guides d'onde d'injection 11 qui s'étendent entre une première extrémité couplée à l'une des sorties du diviseur de puissance 3 et une deuxième extrémité opposée, et qui forment les bras 4 de l'émetteur optoélectronique 1. Chaque guide d'onde d'injection 11 est donc adapté à recevoir un signal optique issu du diviseur de puissance 3, et à permettre la propagation de ce signal optique jusqu'à une antenne optique 7.

L'émetteur optoélectronique 1 comporte également une pluralité de déphaseurs 6 disposés dans les bras 4. Plus précisément, un guide d'onde d'injection 11 est couplé à au moins un déphaseur 6 adapté à modifier la phase du signal optique circulant dans le guide d'onde d'injection 11 considéré, et ainsi de générer une différence de phase $\Delta\gamma$, ou phase relative, entre les modes optiques circulant dans les guides d'onde d'injection 11 adjacents. Les déphaseurs 6 sont disposés entre le diviseur de puissance 3 et les antennes optiques 7. Chaque guide d'onde d'injection 11 peut être équipé d'un déphaseur, ou seulement une partie des guides d'onde d'injection 11, comme par exemple un guide d'onde d'injection 11 sur deux. De plus, un guide d'onde d'injection 11 de référence peut ne pas comporter de déphaseur.

Les déphaseurs 6 peuvent être des déphaseurs à effet électro-réfractif ou à effet thermo-optique. Dans les deux cas, la modification de la phase est obtenue par une modification de l'indice de réfraction $n_{gi}$ du guide d'onde d'injection 11 considéré. Cette modification de l'indice de réfraction peut être obtenue par modification de la densité en porteurs libres dans le cas du déphaseur électro-réfractif, ou par modification de la température appliquée dans le cas du déphaseur thermo-optique.

Les déphaseurs 6 sont adaptés à appliquer une valeur prédéfinie $\Delta\gamma$ de phase relative aux modes optiques se propageant dans les guides d'onde d'injection 11, de manière à obtenir un angle non nul déterminé de l'axe d'émission principal vis-à-vis de l'axe vertical Z dans le plan YZ ou dans le plan $A_L Z$. Cependant, la phase relative $\Delta\gamma$ peut ne pas être identique entre les guides d'onde d'injection 11, soit pour obtenir un profil d'émission en champ lointain différent, soit pour tenir compte et compenser d'éventuelles erreurs de phase. Ces erreurs de phase peuvent provenir d'une dégradation dans le temps de certains composants de l'émetteur optoélectronique 1, des non-uniformités lors du procédé de fabrication, des tolérances non nulles du procédé de fabrication, de l'impact de l'environnement de l'émetteur optoélectronique 1 (par ex., effet éventuel des éléments d'encapsulation (*packaging*) recouvrant les émetteurs élémentaires).

Les déphaseurs 6 sont de préférence connectés à un module de commande (non représenté). En fonction des signaux de commande envoyés par le module de commande, les déphaseurs 6 peuvent générer une phase relative $\Delta\gamma$ prédéterminée dans les signaux optiques circulant dans les différents guides d'onde d'injection 11. Un exemple d'un tel module de commande est décrit dans l'article de Hulme et al intitulé Fully integrated hybrid silicon two dimensional beam scanner, Opt. Express 23 (5), 5861-5874 (2015), ou dans le document WO2021/130149A1.

L'émetteur optoélectronique 1 comporte une pluralité d'antennes optiques 7 disposées en aval des déphaseurs 6, à raison d'une antenne optique 7 par bras 4. La phase relative $\Delta\gamma$ entre les signaux optiques émis par les antennes optiques 7 détermine notamment la valeur de l'angle que forme l'axe d'émission principal du faisceau lumineux en champ lointain vis-à-vis de l'axe vertical Z dans le plan YZ ou dans le plan $A_L Z$ de l'émetteur optoélectronique 1.

Les antennes optiques 7 sont identiques entre elles. Elles sont agencées latéralement suivant les axes X et Y (cf. fig.2). Elles sont espacées les unes des autres d'une distance de préférence comprise entre $\lambda/2$ et $2\lambda$, où $\lambda$ est la longueur d'onde principale du mode optique émis par la source laser 2. A titre informatif, le nombre d'antennes optiques 7 peut aller d'une dizaine à une dizaine de milliers, de manière à limiter la divergence du rayonnement lumineux en champ lointain suivant les axes X et Y.

Les antennes optiques 7 sont ici agencées de manière périodique suivant au moins un axe principal, et ici suivant les axes X et Y, avec un pas $\Lambda_{a,x}$ et un pas $\Lambda_{a,y}$ qui sont de préférence du même ordre de grandeur de manière à symétriser autour de l'axe d'émission le profil d'émission en champ lointain du rayonnement lumineux émis. Comme décrit plus loin, la surface d'émission de chaque antenne optique présente de préférence des dimensions $l_{rv}$, $w_{tot,rv}$ respectivement supérieures ou égales à 50%, de préférence à 70%, et de préférence encore à 80%, du pas $\Lambda_{a,y}$ et $\Lambda_{a,x}$, de manière à réduire l'intensité des lobes secondaires du profil d'émission en champ lointain de l'émetteur optoélectronique 1.

Les figures 3A et 3B sont des vues schématiques et partielles d'une antenne optique 7 d'un émetteur optoélectronique selon un mode de réalisation, en vue de dessus (fig.3A) et en coupe transversale (fig.3B).

Pour cela, chaque antenne optique 7 comporte donc : une structure guidante 10 à émission horizontale, adaptée à extraire le mode optique circulant dans le guide d'onde d'injection 11 et à l'émettre dans le plan XY en direction d'une structure guidante 30 à émission verticale ; et la structure guidante 30 à émission verticale adaptée à recevoir le rayonnement lumineux émis par la structure guidante 10, et à l'émettre en espace libre dans le plan YZ ou dans le plan $A_L Z$. Chaque structure guidante 10, 30 comporte un guide d'onde et un réseau de diffraction.

Dans cet exemple, chaque antenne optique 7 comporte en outre une structure de couplage 20 à gradient d'indice, qui optimise le couplage optique entre les deux structures guidantes 10, 30. Cette structure de couplage est facultative mais avantageuse car elle améliore les performances de l'émetteur optoélectronique 1.

La figure 3C est une vue de dessus, schématique et partielle, d'une antenne optique 7 selon un autre mode de réalisation. Dans cet exemple, la structure de couplage 20 et la structure guidante 30 à émission verticale sont orientées dans le plan XY en fonction de l'angle d'émission $\varphi_{rl}$ de la structure guidante 10 à émission latérale. Ainsi, la structure de couplage 20 et la structure guidante 30 à émission verticale s'étendent suivant un axe longitudinal $A_L$ qui forme vis-à-vis de l'axe Y un angle égal à $\varphi_{rl}$. Notons ici que l'angle d'émission $\theta_{rv}$ de la structure guidante 30 est défini par rapport à l'axe vertical Z, et qu'il est contenu dans un plan $A_L Z$ passant par l'axe longitudinal AL et par l'axe vertical Z. Cependant, par souci de clarté, on note que le profil d'émission en champ lointain $S_{rv}(y)$ de la structure guidante 30 à émission verticale ainsi que l'angle d'émission $\theta_{rv}(y)$ dépendent de l'abscisse y, alors qu'ils dépendent plus précisément d'une abscisse définie le long de l'axe longitudinal $A_L$.

Précisons ici que la valeur de l'angle $\varphi_{rl}$ est fixée par le pas $\Lambda_{rl}$ du réseau de diffraction latérale 11, et que la valeur de l'angle d'émission $\theta_{rv}$ de chaque antenne optique 7 est fixée par le pas $\Lambda_{rv}$ du réseau de diffraction verticale 31 (et non pas par le déphasage $\Delta\gamma$ entre les antennes optiques 7). Ces deux paramètres contrôlent la direction d'émission de l'enveloppe formée par le rayonnement émis par les antennes optiques 7. Le déphasage $\Delta\gamma$ entre les antennes optiques 7 permet, lui, de diriger le faisceau émis par l'émetteur optoélectronique 1 (résultant de l'interférence des faisceaux émis par les antennes optiques 7), qui est forcément situé au sein de l'enveloppe des antennes optiques 7. Dans cet exemple, l'angle d'émission de l'émetteur optoélectronique 1 sera effectivement proche de l'angle d'émission $\theta_{rv}$ des antennes optiques 7 dans la mesure où l'enveloppe des antennes est très étroite (du fait de la grande surface d'émission des antennes optiques 7).

Les antennes optiques 7 sont réalisées ici dans une puce photonique, ici en technologie photonique sur silicium. Celle-ci est formée d'un substrat support (non représenté), ici réalisé en silicium, d'une couche inférieure 40 d'oxyde enterré (BOX en anglais, pour *Buried Oxide*) qui participe à former la gaine des guides d'onde et des réseaux de diffraction réalisés dans une couche de silicium, et d'une couche supérieure 42 réalisée en un oxyde de silicium et qui participe à former la gaine. Dans l'exemple de la figure 3B, la structure guidante 10 à émission latérale et la structure de couplage 20 sont physiquement distinctes, et sont donc séparées dans le plan XY ici par l'oxyde de silicium qui participe à définir la gaine des guides d'onde.

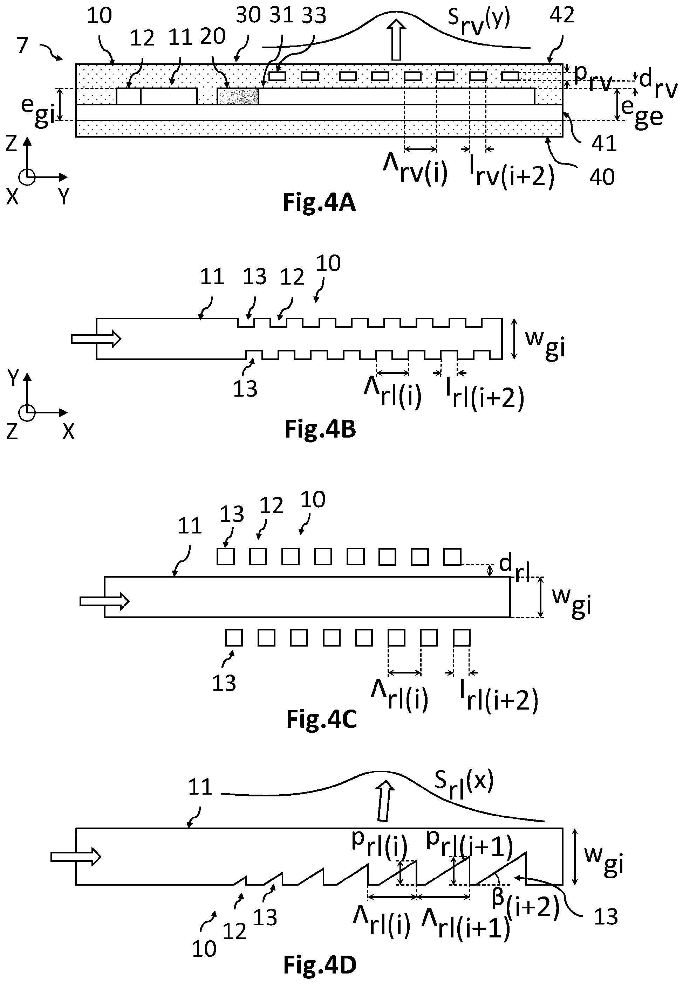

La figure 4A est une vue en coupe, schématique et partielle, d'une antenne optique 7 selon un autre mode de réalisation, dans lequel les structures guidantes 10, 30 et la structure de couplage 20 comportent une sous-couche inférieure 41 continue et commune aux trois structures 10, 20, 30, appelée base ou plateau (*slab* en anglais), surmontée d'une sous-couche supérieure appelée arête (*rib* en anglais), structurée de manière à définir les structures. La base 41 peut ainsi améliorer le couplage optique, notamment entre la structure guidante 10 à émission latérale et la structure de couplage 20.

La structure guidante 10 à émission latérale est donc adaptée à recevoir le mode optique émis par la source laser 2 et à l'extraire dans le plan XY en direction de la structure de couplage 20. Pour cela, elle comporte le guide d'onde d'injection 11 et un réseau de diffraction latérale 12. Elle présente une configuration essentiellement monodimensionnelle, ou linéaire, dans le plan XY, dans le sens où sa largeur est très inférieure à sa longueur d'extraction, par exemple au moins 10 fois voire au moins 100 fois inférieure.

A titre d'exemple, sa largeur (largeur $w_{gi}$ du guide d'onde d'injection 11) peut être inférieure ou égale à $1\mu m$, par exemple de l'ordre de $0.5\mu m$, à comparer à la longueur d'extraction $l_{tot,rl}$ (longueur du réseau de diffraction latérale 12) qui est au moins égale à $10\mu m$, par exemple de l'ordre de $60\mu m$ voire davantage ($100\mu m$ voire plus). Par ailleurs, la longueur d'extraction, définie comme étant la longueur $l_{tot,rl}$ du réseau de diffraction latérale, est inférieure ou égale, et est ici de l'ordre de grandeur, de la largeur $w_{ge}$ de la face d'entrée du guide d'onde d'émission 31 de la structure guidante 30 à émission verticale.

Le guide d'onde d'injection 11 est celui qui transmet le mode optique depuis le diviseur de puissance 3. Il est défini par des paramètres physiques tels que l'indice de réfraction $n_{gi}$ du guide d'onde (i.e. du cœur du guide d'onde), l'indice de réfraction $n_{gg}$ de la gaine, et les dimensions transversales d'épaisseur $e_{gi}$ suivant l'axe Z et de largeur $w_{gi}$ suivant l'axe Y. De préférence, l'épaisseur $e_{gi}$ reste constante le long de l'axe longitudinal X, et la largeur $w_{gi}$ peut garder une valeur constante. En variante, comme présenté plus loin, la largeur $w_{gi}$ peut varier suivant l'axe longitudinal X, par exemple entre une valeur maximale amont et une valeur minimale aval, en particulier pour que le profil d'émission en champ lointain $S_{rl}(x)$ du rayonnement lumineux extrait présente un profil cible prédéfini $S_{rl,c}(x)$.

Le réseau de diffraction latérale 12 est adapté à extraire le mode optique circulant dans le guide d'onde d'injection 11 en direction de la structure de couplage 20 dans le plan XY. Le mode optique est extrait dans le plan XY suivant un profil d'émission en champ lointain $S_{rl}(x)$, suivant un angle d'émission $\varphi_{rl}(x)$. De préférence, le profil d'émission $S_{rl}(x)$ est égal à un profil cible $S_{rl,c}(x)$, et l'angle d'émission $\varphi_{rl}(x)$ est constant et égal à une valeur cible $\varphi_{rl,c}$. Celui-ci est prédéfini par rapport à un axe Y orthogonal à l'axe longitudinal X. Le réseau de diffraction latérale 12 s'étend de préférence sur une longueur suffisante pour extraire la quasi-totalité ou la totalité du mode optique. Cette longueur d'extraction est la dimension $l_{tot,rl}$ du réseau de diffraction latéral 12, qui est de préférence inférieure à la largeur totale $w_{tot,sc}$ de la structure de couplage 20.

Le réseau de diffraction latérale 12 peut être réalisé dans le guide d'onde d'injection 11, par exemple sous la forme d'échancrures, ou peut être réalisé à distance de ce dernier, par exemple sous la forme de plots de haut indice de réfraction entourés par la gaine de bas indice de réfraction. Il comporte donc des structurations périodiques 13 (échancrures ou plots) agencées le long du guide d'onde d'injection 11 suivant l'axe longitudinal X.

Il est défini par des paramètres physiques représentatifs de la diffraction (et donc de l'extraction) du mode optique circulant dans le guide d'onde d'injection 11. Il s'agit en particulier du pas d'agencement $\Lambda_{rl}$, des dimensions de longueur $l_{rl}$ suivant l'axe X et de profondeur ou largeur $p_{rl}$ suivant l'axe Y, du facteur de remplissage $ff_{rl} = l_{rl}/\Lambda_{rl}$, des indices de réfraction des matériaux utilisés, et éventuellement de leur espacement $d_{rl}$ (cf. fig. 4C) vis-à-vis du guide d'onde d'injection 11.

Lorsque la structure guidante 10 à émission latérale ne comporte pas de base 41, les structurations périodiques 13 peuvent être réalisées sous forme d'échancrure sur toute l'épaisseur du guide d'onde d'injection 11. Et lorsqu'elle comporte une base 41, elles peuvent être réalisées que sur l'épaisseur de l'arête. Par ailleurs, elles peuvent être situées de l'un et/ou de l'autre côté du guide d'onde d'injection 11 suivant l'axe Y. Elles ne sont ici pas situées en regard du guide d'onde d'injection 11 suivant l'axe vertical Z. A ce titre, les figures 3A et 3C illustrent un exemple de réseau de diffraction latérale 12 où les structurations périodiques 13 sont ici des échancrures en forme de créneau (échancrures rectangulaires) réalisées dans le guide d'onde d'injection 11, situées ici du côté opposé à la structure de couplage 20.

La figure 4B est une vue de dessus, schématique et partielle, d'un autre exemple de réseau de diffraction latérale 12, où les structurations périodiques 13 sont formées d'échancrures en forme de créneaux rectangulaires réalisés dans le guide d'onde d'injection 11, et sont situées dans les deux côtés opposés du guide d'onde d'injection 11, et agencées ici de manière asymétrique suivant l'axe X.

La figure 4C est une vue de dessus, schématique et partielle, d'un autre exemple d'un réseau de diffraction latérale 12, où, les structurations périodiques 13 sont formées de plots situés à une distance $d_{rl}$ du guide d'onde d'injection 11. Les plots sont réalisés en un matériau de haut indice de réfraction, par exemple ici en silicium ou en un nitrure de silicium, et sont entourés d'un matériau de bas indice de réfraction, ici en un oxyde de silicium. Ils sont situés en regard des deux côtés du guide d'onde d'injection 11. En variante, les plots peuvent n'être situés qu'en regard de l'un ou l'autre des côtés du guide d'onde d'injection 11. Ils sont ici agencés de manière asymétrique suivant l'axe longitudinal X. Ils sont situés ici à une distance $d_{rl}$ non nulle du guide d'onde d'injection, et sont donc espacés de celui-ci par l'oxyde de silicium. Ils pourraient être situés à une distance $d_{rl}$ nulle et donc être accolés au guide d'onde d'injection 11. La distance $d_{rl}$ est définie comme la distance entre les faces en regard des plots périodiques et du guide d'onde. Notons que dans ces exemples, le réseau de diffraction latérale 12 n'impacte que la part évanescente du mode optique, ce qui permet de réduire la valeur du taux d'extraction et donc d'augmenter la longueur d'extraction $l_{tot,rl}$.

La figure 4D est une vue de dessus, schématique et partielle, d'un autre exemple d'un réseau de diffraction latérale 12, où les structurations périodiques 13 sont des échancrures réalisées dans le guide d'onde d'injection 11 et présentent une forme triangulaire. Elles sont situées du côté opposé à la structure de couplage 20. Elles sont définies ici en outre par un angle $\beta$ formé par l'hypoténuse du triangle (ici triangle rectangle) par rapport à l'axe longitudinal X. Bien entendu, la forme triangulaire est ici présentée de manière schématique, et dans la réalité, elle peut être légèrement différente (notamment au niveau des angles) du fait des contraintes de réalisation technologique. Le réseau est ici un réseau blazé (réseau échelette) et l'angle $\beta$ est l'angle de blaze. Cet angle est choisi pour que le réseau fonctionne en réflexion (régime de la réflexion totale interne) et peut être égal à 30° par exemple.

Notons ici que, d'une manière générale, un réseau de diffraction présente un taux d'extraction $\alpha$ du mode optique circulant dans le guide d'onde, ce taux étant parfois appelé force d'émission, et *emission strength* ou *scattering strength* en anglais. Comme indiqué dans l'article de Zhao et al. intitulé Design principles of apodized grating couplers, Journal of Lightware Technology, vol. 38, no. 16, pp. 4435-4446, 2020, la puissance optique locale extraite, qui définit le profil d'émission $S(x)$, dépend de la puissance locale du mode optique $P(x)$ (ou le cas échéant de celle de la part évanescente) et de la force d'extraction $\alpha(x)$ par la relation suivante : $S(x) \sim \alpha(x) \times P(x)$.

Comme il sera décrit plus loin, le guide d'onde d'injection 11 et le réseau de diffraction latérale 12 peuvent présenter, de préférence, des paramètres dimensionnels qui varient longitudinalement selon des fonctions prédéfinies, de sorte que le profil d'émission en champ lointain $S_{rl}(x)$ soit égal à un profil cible prédéfini $S_{rl,c}(x)$, et orienté suivant un angle d'émission $\varphi_{rl}(x)$ égal à une valeur cible $\varphi_{rl,c}$ constante suivant l'axe longitudinal X. Ces paramètres dimensionnels peuvent être la profondeur $p_{rl}$ et/ou la largeur $w_{gi}$, et le pas $\Lambda_{rl}$ du réseau de diffraction latérale 12.

L'antenne optique 7 comporte également une structure de couplage 20 adaptée à assurer le couplage optique entre la structure guidante 10 d'émission latérale et la structure guidante 30 d'émission verticale. Elle est donc située entre les deux structures guidantes 10, 30. Dans la mesure où la longueur d'extraction $l_{tot,rl}$ du réseau de diffraction latérale et du même ordre de grandeur que la largeur $w_{ge}$ du guide d'onde d'émission 31, la structure de couplage 20 n'a pas à assurer une adaptation de la répartition spatiale du mode optique dans le plan XY, mais essentiellement une adaptation de l'indice de réfraction moyen (et donc de l'indice effectif du mode optique) entre une valeur minimale proche de celle de la gaine et la valeur maximale égale à l'indice de réfraction du guide d'onde d'émission 31.

Rappelons ici que, d'une manière générale, l'indice effectif $n_{eff}$ associé à un mode optique supporté par un guide d'onde est défini comme le produit de la constante de propagation $\beta$ et de $\lambda/2\pi$. La constante de propagation $\beta$ dépend de la longueur d'onde $\lambda$ du mode optique, ainsi que des propriétés du guide d'onde ou ici de la structure de couplage (indices de réfraction et dimensions transversales du cœur et de la gaine). L'indice effectif $n_{eff}$ du mode optique correspond, d'une certaine manière, à l'indice de réfraction du guide d'onde 'vu' par le mode optique. Il est habituellement compris entre l'indice de réfraction du guide d'onde et l'indice de réfraction de la gaine.

La structure de couplage 20 est ainsi une structure optique à gradient d'indice, permettant d'adapter l'indice effectif du mode optique transféré ainsi entre le guide d'onde d'injection 11 et le guide d'onde d'émission 31. Il présente des motifs de taille inférieure à la longueur d'onde du mode optique transféré, et il s'agit ainsi d'une structure à gradient d'indice à réseau sub-longueur d'onde (SWG GRIN, pour *subwavelength grating graded Index,* en anglais). Il est formé par exemple d'au moins deux matériaux d'indices de réfraction différents, agencés de sorte que l'indice de réfraction moyen varie de manière monotone suivant l'axe longitudinal $A_L$ de sa face amont (orientée vers le réseau de diffraction latérale 12) vers sa face aval (orientée vers le guide d'onde d'émission 31). L'indice moyen peut être invariant suivant sa largeur, i.e. suivant un axe orthogonal à l'axe longitudinal $A_L$ et contenu dans le plan XY. Il peut être défini à une abscisse quelconque de l'axe longitudinal $A_L$ comme, au premier ordre, une moyenne des indices de réfraction des matériaux de la structure de couplage sur toute la largeur totale $w_{tot,sc}$ de la structure de couplage 20 à l'abscisse considéré.

La structure de couplage 20 présente une largeur totale $w_{tot,sc}$ suivant un axe orthogonal à l'axe $A_L$ et une longueur $l_{tot,sc}$ ici suivant l'axe $A_L$, et dans cet exemple, la longueur $l_{tot,sc}$ est inférieure à sa largeur totale $w_{tot,sc}$, et permet de coupler efficacement le réseau de diffraction latérale 12 au guide d'onde d'émission 31 sur une longueur de couplage réduite. Ainsi, on évite d'avoir à utiliser un taper assurant le couplage entre le guide d'onde d'injection 11 et le guide d'onde d'émission 31 comme dans les exemples de l'art antérieur mentionnés précédemment, ce qui permet de réduire fortement la longueur de couplage entre les structures guidantes 10 et 30, et donc d'augmenter la surface d'émission en espace libre de l'antenne optique 7.

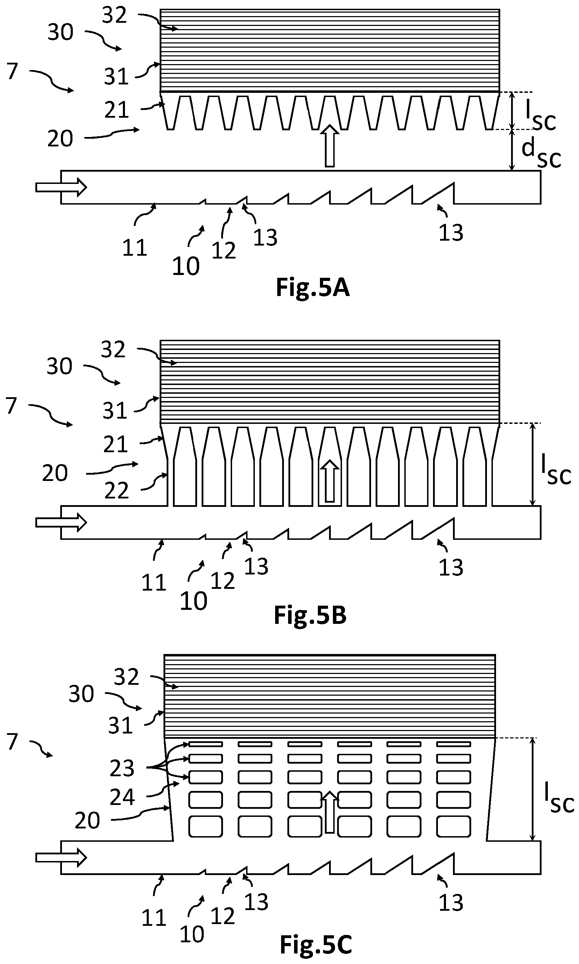

La figure 5A est une vue schématique et partielle d'une antenne optique 7 présentant une structure de couplage 20 selon un premier exemple. Ici, la structure de couplage 20 est formée d'un réseau de coupleurs élémentaires 21 en trapèze ou en pointe de dimensions sub-longueur d'onde, de type *tapers.* Ils sont réalisés d'un seul tenant avec le guide d'onde d'émission 31. Les coupleurs élémentaires 21 sont répartis latéralement suivant un pas $\Lambda_{sc}$ ici de 250nm environ, présentent une largeur amont de 50nm environ et une largeur aval de 200nm environ, et une longueur $l_{sc}$ de 500nm environ. Ils sont espacés ici du guide d'onde d'injection 11 d'une distance $d_{sc}$ de 500nm environ.

La figure 5B est une vue schématique et partielle d'une antenne optique 7 présentant une structure de couplage 20 selon un autre exemple. La structure de couplage 20 diffère ici de celle de la figure 5A essentiellement en ce que les coupleurs élémentaires 21 sont raccordés directement au guide d'onde d'injection 11 par des guides d'onde étroits 22 d'une largeur de 50nm environ. Aussi, la structure de couplage 20 est espacée d'une distance $d_{sc}$ nulle vis-à-vis du guide d'onde d'injection 11.

La figure 5C est une vue schématique et partielle d'une antenne optique 7 présentant une structure de couplage 20 selon un autre exemple. Ici, la structure de couplage 20 est formée d'une portion de couche de matériau de haut indice, ici le silicium, raccordant directement le guide d'onde d'injection 11 au guide d'onde d'émission 31, et présentant un réseau bidimensionnel d'ouvertures 23 de dimensions sub-longueur d'onde remplies d'un milieu de bas indice de réfraction (oxyde de silicium) réalisées dans un milieu continu 24 de haut indice de réfraction (silicium).

La structure guidante 30 à émission verticale comporte un guide d'onde dit d'émission 31, de largeur supérieure à celle du guide d'onde d'injection 11, et un réseau de diffraction verticale 32. Le guide d'onde d'émission 31 est adapté à recevoir un mode optique transmis par la structure de couplage 20 et ayant été extrait du guide d'onde d'injection 11 par le réseau de diffraction latérale 12. Le réseau de diffraction verticale 32 est adapté à extraire le mode optique circulant dans le guide d'onde d'émission 31 et à l'émettre en espace libre suivant une direction d'émission $\theta_{rv}$.

Elle présente de préférence une configuration essentiellement bidimensionnelle dans le plan XY, dans le sens où sa largeur est du même ordre de grandeur à sa longueur d'extraction, et peut être supérieure ou égale à $10\mu m$, par exemple de l'ordre de $60\mu m$. Quoi qu'il en soit, la largeur $w_{ge}$ du guide d'onde d'émission 31 est bien supérieure, par exemple 100 fois supérieure, à la largeur $w_{gi}$ du guide d'onde d'injection 11. La surface d'émission est ici le produit de la largeur totale $w_{tot,rv}$ et de la longueur totale $l_{tot,rv}$ du réseau de diffraction verticale 32, soit de l'ordre de $60\mu m \times 60\mu m$ dans cet exemple.

Le guide d'onde d'émission 31 reçoit le rayonnement lumineux provenant du guide d'onde d'injection 11, extrait par le réseau de diffraction latérale 12, et transmis par la structure de couplage 20. Il est défini par des paramètres physiques tels que l'indice de réfraction $n_{ge}$ du guide d'onde (i.e. du cœur du guide d'onde), l'indice de réfraction $n_{gg}$ de la gaine, et les dimensions transversales d'épaisseur $e_{ge}$ suivant l'axe Z, et de largeur $w_{ge}$ suivant un axe orthogonal à l'axe $A_L$.

Ainsi, le guide d'onde d'émission 31 se distingue du guide d'onde d'injection 11 par sa largeur $w_{ge}$, qui est bien supérieure à la largeur $w_{gi}$, par exemple 100 fois supérieure. De plus, son axe longitudinal $A_L$ n'est pas coplanaire à l'axe longitudinal X du guide d'onde d'injection 11, mais en est sensiblement orthogonal à l'angle d'émission $\varphi_{rl}$ près.

Le réseau de diffraction verticale 32 est adapté à extraire le mode optique circulant dans le guide d'onde d'émission 31 dans l'espace libre. Le mode optique est extrait dans le plan $A_L Z$ suivant un profil d'émission en champ lointain $S_{rv}(y)$, suivant un angle d'émission $\theta_{rv}(y)$. De préférence, le profil d'émission $S_{rv}(y)$ est égal à un profil cible $S_{rv,c}(y)$, et l'angle d'émission $\theta_{rv}(y)$ est constant. Par ailleurs, le réseau de diffraction verticale 32 s'étend de préférence sur une longueur suffisante pour extraire la quasi-totalité ou la totalité du mode optique. Cette longueur d'extraction est la dimension $l_{tot,rv}$ du réseau de diffraction verticale 32.

Le réseau de diffraction verticale 32 est situé au-dessus du guide d'onde d'émission 31, et peut être réalisé soit dans le guide d'onde d'émission 32, soit à distance $d_{rv}$ (nulle ou non nulle) de celui-ci. Aussi, on définit l'épaisseur $e_{ge}$ comme la valeur maximale suivant l'axe Z. Par ailleurs, la largeur $w_{ge}$ peut rester constante ou peut varier suivant l'axe longitudinal $A_L$, de sorte que le profil d'émission $S_{yz}(y)$ du rayonnement lumineux extrait présente un profil cible prédéfini.

Pour cela, le réseau de diffraction verticale 32 comporte des structurations périodiques 33 agencées le long du guide d'onde d'émission 31. Il est ainsi défini par des paramètres physiques représentatifs de la diffraction (et donc de l'extraction) du mode optique circulant dans le guide d'onde d'émission 32. Il s'agit en particulier du pas d'agencement $\Lambda_{rv}$, des dimensions de longueur $l_{rv}$ suivant l'axe longitudinal $A_L$, de hauteur ou de profondeur $p_{rv}$, du facteur de remplissage $ff_{rv}$ = $l_{rv}/\Lambda_{rv}$, et les indices de réfraction des matériaux utilisés, et éventuellement de leur espacement $d_{rv}$ vis-à-vis du guide d'onde d'émission 31. Pour obtenir le profil d'émission cible souhaité, au moins un paramètre dimensionnel présente une variation longitudinale prédéfinie, par exemple le facteur de remplissage $ff_{rv}$, et le pas $\Lambda_{rv}$ peut présenter également variation longitudinale prédéfinie pour garder l'angle d'émission $\theta_{rv}$ constant (pour compenser la variation de l'indice effectif liée à la variation du facteur de remplissage $ff_{rv}$).

La figure 3B est une vue en coupe, schématique et partielle, d'un exemple de réseau de diffraction verticale 32, où les structurations périodiques 33 sont des échancrures en forme de créneau rectangulaire réalisées dans le guide d'onde d'émission 31, à partir de sa face supérieure. Les échancrures peuvent bien entendu présenter d'autres formes que la forme rectangulaire.

La figure 4A est une vue en coupe, schématique et partielle, d'un autre exemple de réseau de diffraction verticale 32, où les structurations périodiques 33 sont des plots en un haut indice de réfraction (par. silicium ou nitrure de silicium) entouré par la gaine en un oxyde de silicium. Les plots sont situés à une distance $d_{rv}$ du guide d'onde d'émission 31, qui peut être non nulle comme ici, ou nulle (les plots étant alors accolés au guide d'onde d'émission 31). Notons que dans cet exemple, le réseau de diffraction verticale 32 n'impacte que la part évanescente du mode optique, ce qui permet de réduire la valeur du taux d'extraction et donc d'augmenter la longueur d'extraction.

Ainsi, les signaux optiques circulant dans les guides d'onde d'injection 11 sont extraits par les réseaux de diffraction latérale 12, puis sont transmis au guide d'onde d'émission 31 par la structure de couplage 20, pour être ensuite extraits et émis en espace libre par les réseaux de diffraction verticale 32. Ainsi, les rayonnements lumineux émis se propagent en espace libre, se recombinent par interférence, et forment ainsi en champ lointain le rayonnement lumineux émis par l'émetteur optoélectronique 1 dont la répartition angulaire autour de l'axe d'émission principal est déterminée et définit le profil d'émission en champ lointain de l'émetteur optoélectronique 1.

Ainsi, l'émetteur optoélectronique 1 peut alors émettre un rayonnement lumineux en champ lointain qui est peu divergeant au moins dans le plan YZ ou $A_L Z$, et ici également dans le plan XZ. Ceci est dû au fait que chaque antenne optique 7 présente une grande surface d'émission, par le fait que le couplage optique entre le guide d'onde d'injection 11 et la structure guidante 30 d'émission verticale est effectué de manière latérale par le biais d'un réseau de diffraction latérale 12 et d'une structure de couplage 20 à gradient d'indice, et non pas de manière horizontale par le biais d'un taper comme dans les exemples de l'art antérieur mentionnés précédemment.

Le fait que la surface d'émission puisse être augmentée pour des valeurs de pas $\Lambda_{a,x}$ et $\Lambda_{a,y}$ inchangés des antennes optiques 7 permet notamment de réduire l'intensité rayonnée dans des lobes secondaires du profil d'émission en champ lointain du rayonnement lumineux émis par l'émetteur optoélectronique 1. Ainsi, dans le cas où l'angle d'émission $\theta_{rv}$ est faible, i.e. de l'ordre de quelques degrés, par exemple inférieur ou égal à 15° voire moins, une largeur $w_{tot,rv}$ du réseau de diffraction verticale 32 (qui correspond à la largeur de la surface d'émission) de l'ordre d'au moins 50%, et de préférence au moins 80% du pas $\Lambda_{a,x}$ permet de réduire voire de supprimer les lobes secondaires du profil d'émission en champ lointain du rayonnement lumineux émis dans le plan XZ. De manière similaire, une longueur totale $l_{tot,rv}$ du réseau de diffraction verticale 32 (qui correspond à la longueur de la surface d'émission) de l'ordre d'au moins 50%, et de préférence au moins 80% du pas $\Lambda_{a,y}$ permet de réduire voire de supprimer les lobes secondaires du profil d'émission en champ lointain du rayonnement lumineux émis dans le plan YZ. Enfin, rappelons ici que le fait d'augmenter le nombre d'antennes optiques 7 permet d'augmenter la directivité du rayonnement lumineux émis, c'est-à-dire de réduire la largeur à mi-hauteur du profil d'émission en champ lointain.

Par ailleurs, le profil d'émission en champ lointain de chaque antenne optique 7 peut être égal à un profil cible prédéfini et orienté suivant un angle d'émission $\theta_{rv}$ égal à une valeur cible prédéfinie. Ceci peut être obtenu par le fait que la structure guidante 10 à émission latérale et/ou la structure guidante 30 à émission verticale peut être apodisée, c'est-à-dire présenter des paramètres dimensionnels qui varient longitudinalement selon des fonctions prédéfinies. Ainsi, la valeur locale du taux d'extraction $\alpha_{rl}$ peut être facilement ajustée par le biais de la largeur $w_{gi}$ du guide d'onde d'injection 11, contrairement à l'apodisation qui peut être effectuée dans l'art antérieur où les auteurs modifient uniquement les dimensions des structurations périodiques, comme le montre par exemple l'article de Mekis et al. intitulé A Grating-Coupler-Enabled CMOS Photonics Platform, IEEE Journal of Selected Topics in Quantum Electronics, vol. 17, no. 3, pp. 597-608, May-June 2011. Enfin, par le fait de faire varier longitudinalement la largeur $w_{gi}$ du guide d'onde d'injection 11 et au moins le pas $\Lambda_{rl}$ du réseau de diffraction latérale 12, on limite les contraintes de dimensionnement des structurations périodiques qui pourraient conduire à des dimensions particulièrement faibles et donc peu ou pas compatibles avec les technologies conventionnelles habituellement utilisées dans les procédés de fabrication par exemple en photonique sur silicium.

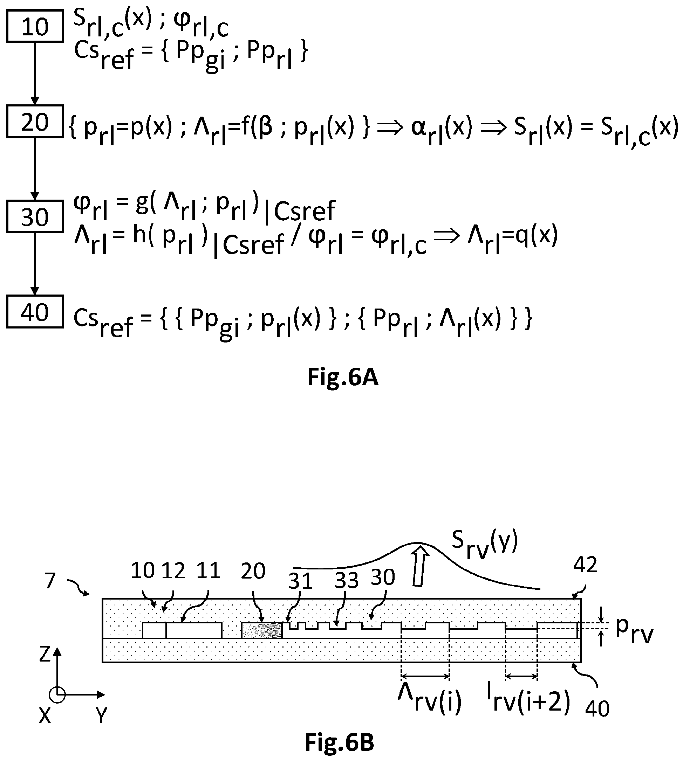

La figure 6A est un organigramme d'un procédé de dimensionnement de la structure guidante 10 à émission latérale et de fabrication de l'antenne optique 7 correspondante de l'émetteur optoélectronique 1, selon un mode de réalisation. Le guide d'onde d'injection 11 et le réseau de diffraction latérale 12 de la structure guidante 10 présentent des paramètres dimensionnels qui varient suivant l'axe longitudinal X, de sorte que le profil d'émission $S_{rl}(x)$ est égal à un profil cible prédéfini $S_{rl,c}(x)$, et que l'angle d'émission $\varphi_{rl}(x)$ est constant et égal à un angle cible prédéfini $\varphi_{rl,c}(x)$. On parle ainsi d'apodisation du guide d'onde d'injection 11 et du réseau de diffraction latérale 12, qui peut concerner toute la longueur du guide 11 (dans l'antenne correspondante) et du réseau 12, ou seulement une partie.

Dans cet exemple, le réseau de diffraction latérale 12 est formé d'échancrures de forme triangulaire réalisées dans le guide d'onde d'injection 11, telles que représentées sur la figure 4D. Les échancrures présentent une variation longitudinale $p_{rl}=p(x)$ de la profondeur $p_{rl}$ selon une fonction p prédéfinie, ici croissante, de sorte que le profil d'émission en champ lointain $S_{rl}(x)$ est égal à un profil cible $S_{rl,c}(x)$. Cependant, cette variation longitudinale de la profondeur $p_{rl}$ des échancrures se traduit par une variation longitudinale de la largeur minimale $w_{gi,min}(x)$, définie comme la différence entre la largeur $w_{gi}$ et la valeur $p_{rl}$. Cette variation longitudinale de la largeur minimale $w_{gi,min}(x)$ du guide d'onde d'injection 11 se traduit par une variation de l'indice effectif du mode optique. Or, l'angle d'émission $\theta_{rl}(x)$ dépend de la valeur locale de l'indice effectif, selon l'équation :

[Math 1]

$$\sin\theta(x) = \frac{n_{eff}(x) + m\frac{\lambda}{\Lambda}}{n_c}$$

où m est l'ordre de diffraction.

Il apparaît donc que pour garder l'angle d'émission $\varphi_{rl}(x)$ égal à la valeur cible $\varphi_{rl,c}$ et constant suivant l'axe longitudinal X, il importe de définir également une variation longitudinale d'un paramètre dimensionnel du réseau de diffraction latérale 12, par exemple une variation longitudinale $\Lambda_{rl}$=q(x) du pas $\Lambda_{rl}$ selon une fonction q prédéfinie. On peut noter les paramètres dimensionnels de chaque période à l'aide d'un indice i variant de 1 à M, où M est le nombre de périodes du réseau de diffraction latérale dans la partie apodisée. On a ainsi le pas $\Lambda_{rl}(i)$ et la profondeur $p_{rl}(i)$ pour la période d'indice i.

Dans cet exemple, la structure guidante 10 à émission latérale présente d'une part une variation longitudinale $p_{rl}$=p(x) de la profondeur $p_{rl}$ des échancrures, qui est représentative d'une variation longitudinale de la largeur minimale $w_{gi,min}$ du guide d'onde d'injection 11, et d'autre part une variation longitudinale $\Lambda_{rl}$=q(x) du pas du réseau de diffraction latérale 12. Les fonctions p et q sont prédéfinies de sorte que le profil d'émission en champ lointain $S_{rl}(x)$ orienté suivant l'angle d'émission $\varphi_{rl}$ est égal au profil cible $S_{rl,c}$ orienté suivant l'angle $\varphi_{rl,c}$.

Lors d'une étape 10, on définit le profil d'émission cible en champ lointain $S_{rl,c}(x)$ du rayonnement lumineux à émettre par la structure guidante 10 de chaque antenne optique 7, ainsi que l'angle d'émission cible $\varphi_{rl,c}$. A titre d'exemple, le profil d'émission $S_{rl,c}(x)$ est gaussien. Par ailleurs, l'angle d'émission cible $\varphi_{rl,c}$ est constant pour toute valeur x de l'axe longitudinal X, et est égal ici à 5°. On considère ici que le mode optique présente une longueur d'onde $\lambda$ égale par exemple à 1550nm.

De plus, on définit une même configuration structurelle de référence $Cs_{ref}$ pour les structures guidantes 10. Cette configuration structurelle $Cs_{ref}$ comporte les valeurs des paramètres physiques $Pp_{gi}$ du guide d'onde d'injection 11 qui définissent les propriétés optiques de transmission du mode optique par le guide d'onde d'injection 11, à savoir les indices de réfraction $n_{gi}$ et $n_{gg}$ du guide d'onde d'injection 11 et de la gaine, et l'épaisseur $e_{gi}$ du guide d'onde, de sorte que l'on a : $Pp_{gi} = \{n_{gi}, n_{gg}, e_{gi}\}$. A titre d'exemple, le guide d'onde d'injection 11 peut être en silicium et présenter un indice de réfraction $n_{gi}$ de 3.48, et la gaine être en $SiO_2$ et présenter un indice de réfraction $n_{gg}$ de 1.45 à la longueur d'onde $\lambda$ de 1.55$\mu$m. Par ailleurs, le guide d'onde d'injection 11 présente ici une épaisseur constante $e_c$ égale à 220nm. La liste de ces paramètres physiques $Pp_{gi}$ sera complétée par la variation longitudinale $p_{rl}(x)$ de la profondeur $p_{rl}$ des échancrures périodiques du réseau de diffraction latérale, qui impactent la largeur minimale $w_{gi,min}$ du guide d'onde d'injection 11, qui est déterminée plus loin.

La configuration structurelle $Cs_{ref}$ comporte également les valeurs des paramètres physiques $Pp_{rl}$ du réseau de diffraction latérale 12 qui définissent les propriétés optiques de diffraction du mode optique par le réseau de diffraction latérale 12. Ainsi, les paramètres physiques $Pp_{rl}$ peuvent comporter l'indice de réfraction $n_{gi}$ du guide d'onde d'injection 11, l'indice de réfraction $n_{gg}$ de la gaine, ici égal à 1.45 pour du $SiO_2$, l'angle d'inclinaison $\beta$ de l'hypoténuse ici égal à 30°. La liste de ces paramètres physiques $Pp_{rl}$ sera complétée par la variation longitudinale $\Lambda_r(x)$ du pas $\Lambda_r$ du réseau de diffraction latérale 12, qui sera déterminée plus loin.

Lors d'une étape 20, on définit une variation longitudinale $p_{rl}$=p(x) de la profondeur $p_{rl}$ des échancrures du réseau de diffraction latérale 12 telle que la variation longitudinale du taux d'extraction $\alpha_{rl}(x)$ se traduise par un profil d'émission en champ lointain $S_{rl}(x)$ qui est égal au profil d'émission cible $S_{rl,c}(x)$, compte tenu de la configuration structurelle de référence $Cs_{ref}$, et pour un pas $\Lambda_{rl}$ défini ici par la forme triangulaire des échancrures. Plus précisément, les échancrures se succèdent sans espacement suivant l'axe longitudinal X entre l'extrémité de l'hypoténuse d'un triangle et l'extrémité de la base orientée suivant l'axe Y du triangle adjacent. On rappelle que l'angle d'inclinaison $\beta$ reste constant d'une échancrure à l'autre et est égal à 30°.

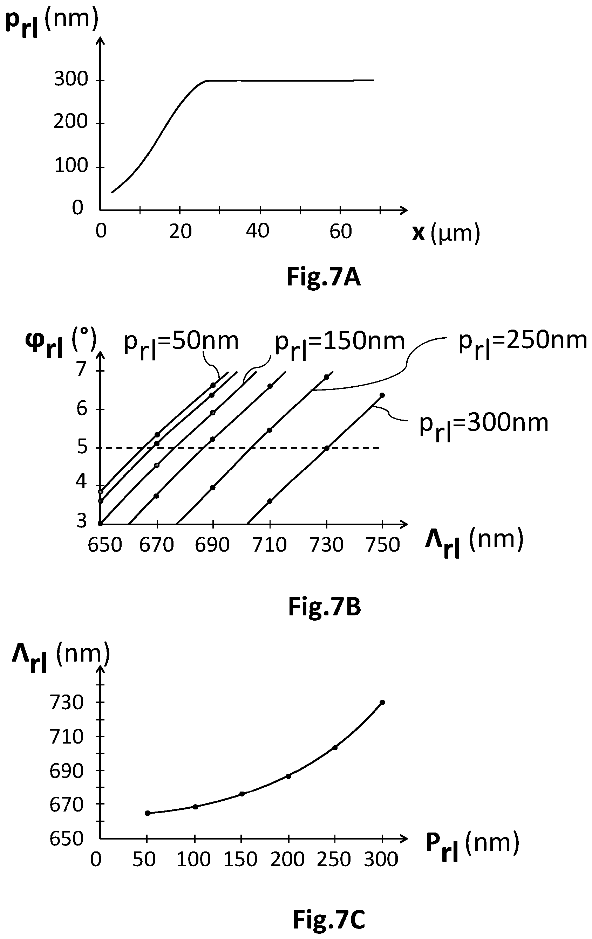

La figure 7A illustre un exemple de la fonction p de la variation longitudinale $p_{rl}$=p(x) de la profondeur $p_{rl}$ des échancrures. Dans cet exemple, la fonction p est une fonction de type : $p_{rl}(x) = p_{rl,max}\times exp(-x^2/2\sigma^2)$, où $p_{rl,max}$ est une valeur maximale prédéfinie, ici de 300nm, de la profondeur des échancrures, et où $\sigma$ est la variance de la gaussienne du profil d'émission cible $S_{rl,c}(x)$.

Lors d'une étape 30, on détermine une évolution de l'angle d'émission $\varphi_{rl}$ en fonction du pas $\Lambda_{rl}$ pour différentes valeurs de la profondeur $p_{rl}$, et compte tenu de la configuration structurelle de référence $Cs_{ref}$. La figure 7B illustre un exemple d'une telle évolution. Le pas varie dans une gamme allant ici de 650 et à 750nm, et plusieurs simulations FDTD sont effectuées pour des profondeurs $p_{rl}$ égale à 50nm, 100nm... jusqu'à la valeur maximale $p_{rl,max}$ de 300nm. On détermine une pluralité de courbes, une par valeur de la profondeur $p_{rl}$, passant par les points concernés.

On en déduit ensuite l'évolution $\Lambda_{rl}$=h($p_{rl}$) entre le pas $\Lambda_{rl}$ et la profondeur $p_{rl}$, pour laquelle l'angle d'émission $\varphi_{rl}$ est égal à l'angle cible $\varphi_{rl,c}$ de 5°. La figure 7C illustre un exemple d'une telle évolution, où la fonction h est ici une fonction puissance. Cette courbe passe par les points issus de la figure 7B. Enfin, connaissant la variation longitudinale $p_{rl}$=p(x) et

la relation $\Lambda_{rl}=h(p_{rl})$, on peut déterminer la variation longitudinale $\Lambda_{rl}=q(x)$ du pas $\Lambda_{rl}$ du réseau de diffraction latérale <u>12</u>.

Enfin, lors d'une étape 40, on obtient des structures guidantes 10 des antennes optiques 7 qui présentent toute la même configuration structurelle $Cs_{ref}$, celle-ci étant donc complétée par la variation longitudinale $p_{rl}=p(x)$ de la profondeur $p_{rl}$ du guide d'onde d'injection et par la variation longitudinale $\Lambda_{rl}=q(x)$ du pas du réseau de diffraction latérale qui viennent d'être déterminées. On peut alors fabriquer les structures guidantes 10 des antennes optiques 7.

Notons que cet exemple s'applique également aux réseaux de diffraction latérale 12 du type de celui illustré sur la 4C, où ils sont formés de plots situés à distance de l'un et/ou de l'autre côté du guide d'onde d'injection 11. Dans ce cas, à titre d'exemple, le procédé peut déterminer la variation longitudinale $w_{gi}=p(x)$ de la largeur $w_{gi}$ du guide d'onde d'injection 11 et la variation longitudinale $\Lambda_{rl}=q(x)$ du pas du réseau de diffraction latérale 12. D'autres paramètres physiques peuvent varier, comme le facteur de remplissage, les dimensions des plots, etc.

Notons que la structure guidante 30 peut également être apodisée de sorte que le profil d'émission $S_{rv}(y)$ est égal à un profil cible $S_{rv,c}(y)$ et orienté selon un angle d'émission cible $\theta_{rv,c}$ qui est constant suivant l'axe longitudinal $A_L$. Un procédé similaire à celui qui vient d'être décrit peut être utilisé. Des paramètres comme le pas $\Lambda_{rv}$ du réseau de diffraction verticale 32, et l'une ou l'autre des dimensions des structurations périodiques 33, voire le facteur de remplissage, peuvent ainsi présenter une variation longitudinale suivant l'axe longitudinal $A_L$. A ce titre, la figure 6B est une vue en coupe, schématique et partielle, d'une structure guidante 30 où le réseau de diffraction verticale 32 présente un pas $\Lambda_{rv}$ qui varie longitudinalement suivant une fonction prédéfinie. La longueur $l_{rv}$ des échancrures peut ici présenter une variation longitudinale suivant une fonction prédéfinie. Ainsi, la variation longitudinale de la longueur $l_{rv}$ (et donc du facteur de remplissage) selon une fonction prédéfinie permet d'obtenir le profil d'émission souhaité, et la variation longitudinale du pas $\Lambda_{rv}$ selon une autre fonction prédéfinie permet de garder l'angle d'émission $\theta_{rv}$ constant et égal à la valeur cible (compensant ainsi la variation de l'indice effectif induite par celle de la longueur $l_{rv}$).

Ainsi, le procédé de dimensionnement et de fabrication permet de réaliser une structure guidante 10 apodisée, i.e. qui présente des variations longitudinales de la largeur $w_{gi}$ du guide d'onde d'injection 11 et du pas $\Lambda_{rl}$ du réseau de diffraction latérale 12 sur au moins une partie de la longueur de la structure guidante 10 de l'antenne optique 7, de sorte que le rayonnement lumineux extrait présente le profil d'émission en champ lointain voulu orienté suivant l'angle d'émission souhaité. Le procédé peut s'appliquer également à la structure guidante 30.

Des modes de réalisation particuliers viennent d'être décrits. Différentes variantes et modifications apparaîtront à l'homme du métier.

## Revendications

**1.** Emetteur optoélectronique (1) à antenne réseau à commande de phase, comportant :

    ◦ un diviseur (3), destiné à être couplé à une source laser (2) ;
    ◦ une pluralité de guides d'onde dits d'injection (11), couplés au diviseur (3) et s'étendant suivant un axe longitudinal dans un plan principal, formant les bras (4) de l'émetteur optoélectronique ;
    ◦ une pluralité de déphaseurs (6) et d'antennes optiques (7) disposés dans les bras (4), chaque antenne optique (7) comportant :

        • le guide d'onde d'injection (11) ;
        • une structure guidante (30) dite à émission verticale, destinée à recevoir un mode optique provenant du guide d'onde d'injection (11), et formée de :

            ▪ un guide d'onde dit d'émission (31) de largeur supérieure à celle du guide d'onde d'injection (11),
            ▪ un réseau de diffraction verticale (32), couplé au guide d'onde d'émission (31) et adapté à extraire en espace libre un mode optique circulant dans le guide d'onde d'émission (31) ;

        ◦ **caractérisé en ce que** chaque antenne optique (7) comporte :

        • une structure guidante (10) dite à émission horizontale, formée de :

            ▪ le guide d'onde d'injection (11),
            ▪ un réseau de diffraction latérale (12), couplé au guide d'onde d'injection (11) et adapté à extraire, dans le plan principal et en direction du guide d'onde d'émission (31), un mode optique circulant dans le guide d'onde d'injection (11).

**2.** Emetteur optoélectronique (1) selon la revendication 1, comportant une structure de couplage (20) formée d'un milieu à gradient d'indice, située entre la structure guidante (10) à émission horizontale et la structure guidante (30) à émission verticale, et adaptée à assurer un couplage optique entre le réseau de diffraction latérale (12) et le guide d'onde d'émission (31).

3. Emetteur optoélectronique (1) selon la revendication 2, dans lequel la structure de couplage (20) comporte un réseau de coupleurs élémentaires (21) agencés latéralement en regard du réseau de diffraction latérale (12), et présente des dimensions transversales inférieures à une longueur d'onde principale du mode optique émis par la source laser (2) ; ou est formée d'un milieu d'un premier indice de réfraction dans lequel sont situées des ouvertures de dimensions transversales inférieures à une longueur d'onde principale du mode optique émis par la source laser (2) et remplies par un milieu d'un deuxième indice de réfraction inférieur au premier indice.

4. Emetteur optoélectronique (1) selon la revendication 2 ou 3, dans lequel la structure de couplage (20) présente une longueur inférieure ou égale à sa largeur totale.

5. Emetteur optoélectronique (1) selon l'une quelconque des revendications 2 à 4, dans lequel le guide d'onde d'émission (31) et le réseau de diffraction verticale (32) présentent respectivement des largeurs au moins égales à une largeur totale de la structure de couplage (20).

6. Emetteur optoélectronique (1) selon l'une quelconque des revendications 1 à 5, dans lequel les antennes optiques (7) sont agencées périodiquement avec un pas $\Lambda_{a,y}$ suivant un axe orthogonal à l'axe longitudinal des guides d'onde d'injection (11), le réseau de diffraction verticale (32) présentant une longueur totale dite d'extraction $l_{tot,rv}$ supérieure ou égale à 50%, ou à 80%, du pas $\Lambda_{a,y}$.

7. Emetteur optoélectronique (1) selon l'une quelconque des revendications 1 à 6, dans lequel les antennes optiques (7) sont agencées périodiquement avec un pas $\Lambda_{a,x}$ suivant l'axe longitudinal des guides d'onde d'injection (11), le réseau de diffraction verticale (32) présentant une largeur $w_{tot,rv}$ supérieure ou égale à 50% ou à 80%, du pas $\Lambda_{a,x}$.

8. Emetteur optoélectronique (1) selon l'une quelconque des revendications 1 à 7, dans lequel le réseau de diffraction latérale (12) est adapté à extraire le mode optique selon un angle d'émission $\varphi_{rl}$ par rapport à un axe situé dans le plan principal et orthogonal à l'axe longitudinal du guide d'onde d'injection (11), la structure guidante (30) à émission verticale étant agencée suivant un axe longitudinal parallèle à l'angle d'émission $\varphi_{rl}$.

9. Emetteur optoélectronique (1) selon l'une quelconque des revendications 1 à 8, dans lequel le réseau de diffraction latérale (12) présente une longueur dite d'extraction $l_{tot,rl}$ supérieure à une largeur du guide d'onde d'injection (11), et dans lequel le guide d'onde d'émission (31) présente une largeur au moins égale à la longueur d'extraction $l_{tot,rl}$ du réseau de diffraction latérale (12).

10. Emetteur optoélectronique (1) selon l'une quelconque des revendications 1 à 9, dans lequel le guide d'onde d'injection (11) présente une largeur inférieure ou égale à 1$\mu$m, et le guide d'onde d'émission (31) et le réseau de diffraction verticale (32) présentent respectivement des largeurs supérieures ou égales à 10$\mu$m.

11. Emetteur optoélectronique (1) selon l'une quelconque des revendications 1 à 10, dans lequel le réseau de diffraction verticale (32) présente une longueur totale dite d'extraction $l_{tot,rv}$ supérieure ou égale à 10$\mu$m.

12. Emetteur optoélectronique (1) selon l'une quelconque des revendications 1 à 11, dans lequel le réseau de diffraction latérale (12) est formé d'échancrures périodiques réalisées dans le guide d'onde d'injection (11) ; ou est formé de plots périodiques situés à distance du guide d'onde d'injection (11).

13. Emetteur optoélectronique (1) selon l'une quelconque des revendications 1 à 12, dans lequel le guide d'onde d'injection (11) présente une variation longitudinale d'au moins un paramètre représentatif de sa largeur selon une fonction p prédéfinie, et le réseau de diffraction latérale (12) présente une variation longitudinale d'un pas $\Lambda_{rl}$ d'agencement de structurations périodiques (13) selon une fonction q prédéfinie, les fonctions p et q étant prédéfinies en fonction d'un profil d'émission cible en champ lointain $S_{rl,c}(x)$ prédéfini d'un rayonnement lumineux extrait par le réseau de diffraction latérale (12) et d'un angle d'émission cible $\varphi_{rl,c}$ prédéfini.

14. Emetteur optoélectronique (1) selon l'une quelconque des revendications 1 à 13, dans lequel le réseau de diffraction verticale (32) présente une variation longitudinale d'au moins un paramètre dimensionnel de structurations périodiques (33) selon une fonction prédéfinie en fonction d'un profil d'émission cible en champ lointain $Srv_{,c}(x)$ prédéfini d'un rayonnement lumineux extrait par le réseau de diffraction verticale (32) et d'un angle d'émission cible $\varphi_{rv,c}$ prédéfini.

15. Emetteur optoélectronique (1) selon l'une quelconque des revendications 1 à 14, comportant une puce photonique de type SOI dans laquelle sont situées la structure guidante (10) à émission latérale, et la structure guidante (30) à émission verticale.

**Patentansprüche**

1. Optoelektronischer Sender (1) mit phasengesteuerter Antennenanordnung, umfassend:

   ○ einen Teiler (3), der dazu bestimmt ist, mit einer Laserquelle (2) gekoppelt zu werden;
   ○ eine Vielzahl von sogenannten Injektionswellenleitern (11), die mit dem Teiler (3) gekoppelt sind und sich entlang einer Längsachse in einer Hauptebene erstrecken und Arme (4) des optoelektronischen Emitters bilden;
   ○ eine Vielzahl von Phasenschiebern (6) und optischen Antennen (7), die in den Armen (4) angeordnet sind, wobei jede optische Antenne (7) umfasst:

   • den Injektionswellenleiter (11);
   • eine als vertikal emittierend bezeichnete Leitstruktur (30), die dazu bestimmt ist, eine vom Injektionswellenleiter (11) kommende optische Mode aufzunehmen, und die gebildet wird aus:

   ▪ einem sogenannten Emissionswellenleiter (31) mit einer Breite, die größer ist als die des Injektionswellenleiters (11),
   ▪ einem vertikalen Beugungsgitter (32), das mit dem Emissionswellenleiter (31) gekoppelt ist und dazu ausgelegt ist, eine im Emissionswellenleiter (31) zirkulierende optische Mode in den freien Raum zu extrahieren;

   ○ **dadurch gekennzeichnet, dass** jede optische Antenne (7) umfasst:

   • eine als horizontal emittierend bezeichnete Leitstruktur (10), die gebildet wird aus:

   ▪ dem Injektionswellenleiter (11);
   ▪ einem seitlichen Beugungsgitter (8), das mit dem Injektionswellenleiter (11) gekoppelt ist und dazu ausgelegt ist, in der Hauptebene und in Richtung des Emissionswellenleiters (31) eine im Injektionswellenleiter (11) zirkulierende optische Mode zu extrahieren.

2. Optoelektronischer Sender (1) nach Anspruch 1, mit einer Kopplungsstruktur (20), die aus einem Medium mit Indexgradient gebildet ist, zwischen der horizontal emittierenden Leitstruktur (10) und der vertikal emittierenden Leitstruktur (30) angeordnet ist und dazu ausgelegt ist, eine optische Kopplung zwischen dem seitlichen Beugungsgitter (12) und dem Emissionswellenleiter (31) zu gewährleisten.

3. Optoelektronischer Sender (1) nach Anspruch 2, wobei die Kopplungsstruktur (20) ein Gitter aus Elementarkopplern (21) umfasst, die seitlich gegenüber dem seitlichen Beugungsgitter (12) angeordnet sind und Querabmessungen aufweisen, die kleiner sind als eine Hauptwellenlänge des von der Laserquelle (2) emittierten optischen Modus aufweist; oder aus einem Medium mit einem ersten Brechungsindex gebildet ist, in dem sich Öffnungen mit Querabmessungen befinden, die kleiner sind als eine Hauptwellenlänge des von der Laserquelle (2) emittierten optischen Modus, und die mit einem Medium mit einem zweiten Brechungsindex gefüllt sind, der kleiner ist als der erste Index.

4. Optoelektronischer Sender (1) nach Anspruch 2 oder 3, wobei die Kopplungsstruktur (20) eine Länge aufweist, die kleiner oder gleich ihrer Gesamtbreite ist.

5. Optoelektronischer Sender (1) nach einem der Ansprüche 2 bis 4, wobei der Emissionswellenleiter (31) und das vertikale Beugungsgitter (32) jeweils Breiten aufweisen, die mindestens einer Gesamtbreite der Kopplungsstruktur (20) gleichen.

6. Optoelektronischer Sender (1) nach einem der Ansprüche 1 bis 5, wobei die optischen Antennen (7) periodisch mit

einer Schrittweite $\Lambda_{a,y}$ entlang einer zur Längsachse der Injektionswellenleiter (11) orthogonalen Achse angeordnet sind, wobei das vertikale Beugungsgitter (32) eine sogenannte Gesamtextraktionslänge $l_{tot,rv}$ aufweist, die größer oder gleich 50 % oder 80 % der Schrittweite $\Lambda_{a,y}$ ist.

7.  Optoelektronischer Sender (1) nach einem der Ansprüche 1 bis 6, wobei die optischen Antennen (7) periodisch mit einer Schrittweite $\Lambda_{a,x}$ entlang der Längsachse der Injektionswellenleiter (11) angeordnet sind, wobei das vertikale Beugungsgitter (32) eine Breite $w_{tot,rv}$ aufweist, die größer oder gleich 50 % oder 80 % der Schrittweite $\Lambda_{a,x}$ ist.

8.  Optoelektronischer Sender (1) nach einem der Ansprüche 1 bis 7, wobei das seitliche Beugungsgitter (12) dazu ausgelegt ist, die optische Mode in einem Emissionswinkel $\varphi_{rl}$ in Bezug auf eine Achse zu extrahieren, die in der Hauptebene liegt und orthogonal zur Längsachse des Injektionswellenleiters (11) ist, wobei die vertikal emittierende Leitstruktur (30) entlang einer Längsachse angeordnet ist, die parallel zum Emissionswinkel $\varphi_{rl}$ ist.

9.  Optoelektronischer Sender (1) nach einem der Ansprüche 1 bis 8, wobei das seitliche Beugungsgitter (12) eine sogenannte Extraktionslänge $l_{tot,rl}$ aufweist, die größer ist als eine Breite des Injektionswellenleiters (11), und wobei der Emissionswellenleiter (31) eine Breite aufweist, die mindestens gleich der Extraktionslänge $l_{tot,rl}$ des seitlichen Beugungsgitters (12) ist.

10. Optoelektronischer Sender (1) nach einem der Ansprüche 1 bis 9, wobei der Injektionswellenleiter (11) eine Breite von weniger als oder gleich 1 $\mu$m aufweist und der Emissionswellenleiter (31) und das vertikale Beugungsgitter (32) jeweils Breiten von mehr als oder gleich 10 $\mu$m aufweisen.

11. Optoelektronischer Sender (1) nach einem der Ansprüche 1 bis 10, wobei das vertikale Beugungsgitter (32) eine sogenannte Extraktionsgesamtlänge $l_{tot,rv}$ von mindestens 10 $\mu$m aufweist.

12. Optoelektronischer Sender (1) nach einem der Ansprüche 1 bis 11, wobei das seitliche Beugungsgitter (12) aus periodischen Aussparungen im Injektionswellenleiter (11) gebildet ist; oder aus periodischen Erhebungen gebildet ist, die entfernt vom Injektionswellenleiter (11) angeordnet sind.

13. Optoelektronischer Sender (1) nach einem der Ansprüche 1 bis 12, wobei der Injektionswellenleiter (11) eine Längsänderung mindestens eines Parameters aufweist, der für seine Breite gemäß einer vordefinierten Funktion p repräsentativ ist, und das laterale Beugungsgitter (12) eine Längsänderung einer Schrittweite $\Lambda_{rl}$ der Anordnung periodischer Strukturen (13) gemäß einer vordefinierten Funktion q aufweist, wobei die Funktionen p und q in Bezug auf ein vordefiniertes Fernfeld-Zielemissionsprofil $S_{rl,c}(x)$ einer vom seitlichen Beugungsgitter (12) extrahierten Lichtstrahlung und einen vordefinierten Zielemissionswinkel $\varphi_{rl,c}$ vordefiniert sind.

14. Optoelektronischer Sender (1) nach einem der Ansprüche 1 bis 13, wobei das vertikale Beugungsgitter (32) eine Längsänderung mindestens eines Dimensionsparameters periodischer Strukturen (33) aufweist, gemäß einer vordefinierten Funktion in Bezug auf ein vordefiniertes Fernfeld-Zielemissionsprofil $Srv_c(x)$ und einen vordefinierten Zielstrahlwinkel $\varphi_{rv,c}$.

15. Optoelektronischer Sender (1) nach einem der Ansprüche 1 bis 14, umfassend einen photonischen Chip vom SOI-Typ, in dem sich die seitlich emittierende Führungsstruktur (10) und die vertikal emittierende Führungsstruktur (30) befinden.

**Claims**

1.  An optoelectronic emitter (1) with a phased-array antenna, comprising:

    ◦ a splitter (3), intended to be coupled to a laser source (2);
    ◦ a plurality of waveguides, called injection waveguides (11), coupled to the splitter (3) and extending along a longitudinal axis in a main plane, forming the arms (4) of the optoelectronic emitter;
    ◦ a plurality of phase shifters (6) and of optical antennas (7) disposed in the arms (4), each optical antenna (7) comprising:

      • the injection waveguide (11);
      • a guiding structure, called vertical emission guiding structure (30), intended to receive an optical mode originating from the injection waveguide (11), and formed by:

- a waveguide, called emission waveguide (31), that is wider than the injection waveguide (11);
- a vertical diffraction grating (32), coupled to the emission waveguide (31) and adapted to extract to free-space an optical mode flowing through the emission waveguide (31);

○ **characterized in that** each optical antenna (7) comprises:

• a guiding structure, called horizontal emission guiding structure (10), formed by:

- the injection waveguide (11);
- a lateral diffraction grating (12), coupled to the injection waveguide (11) and adapted to extract, in the main plane and toward the emission waveguide (31), an optical mode flowing through the injection waveguide (11).

2. The optoelectronic emitter (1) as claimed in claim 1, comprising a coupling structure (20) formed by a graded index medium, located between the horizontal emission guiding structure (10) and the vertical emission guiding structure (30), and adapted to provide optical coupling between the lateral diffraction grating (12) and the emission waveguide (31).

3. The optoelectronic emitter (1) as claimed in claim 2, wherein the coupling structure (20) comprises an array of elementary couplers (21) laterally arranged facing the lateral diffraction grating (12), and has transverse dimensions smaller than a main wavelength of the optical mode emitted by the laser source (2); or is formed by a medium with a first refractive index containing openings with transverse dimensions that are smaller than a main wavelength of the optical mode emitted by the laser source (2) and filled with a medium with a second refractive index lower than the first index.

4. The optoelectronic emitter (1) as claimed in claim 2 or 3, wherein the length of the coupling structure (20) is less than or equal to its total width.

5. The optoelectronic emitter (1) as claimed in any one of claims 2 to 4, wherein the emission waveguide (31) and the vertical diffraction grating (32) respectively have widths that are at least equal to a total width of the coupling structure (20).

6. The optoelectronic emitter (1) as claimed in any one of claims 1 to 5, wherein the optical antennas (7) are periodically arranged with a pitch $\Lambda_{a,y}$ along an axis orthogonal to the longitudinal axis of the injection waveguides (11), with the vertical diffraction grating (32) having a total length, called extraction length $l_{tot,rv}$, that is greater than or equal to 50% or 80% of the pitch $\Lambda_{a,y}$.

7. The optoelectronic emitter (1) as claimed in any one of claims 1 to 6, wherein the optical antennas (7) are periodically arranged with a pitch $\Lambda_{a,x}$ along the longitudinal axis of the injection waveguides (11), with the vertical diffraction grating (32) having a width $w_{tot,rv}$ that is greater than or equal to 50% or 80% of the pitch $\Lambda_{a,x}$.

8. The optoelectronic emitter (1) as claimed in any one of claims 1 to 7, wherein the lateral diffraction grating (12) is adapted to extract the optical mode at an emission angle $\varphi_{rl}$ relative to an axis located in the main plane and orthogonal to the longitudinal axis of the injection waveguide (11), with the vertical emission guiding structure (30) being arranged along a longitudinal axis parallel to the emission angle $\varphi_{rl}$.

9. The optoelectronic emitter (1) as claimed in any one of claims 1 to 8, wherein the length, called extraction length $l_{tot,rl}$, of the lateral diffraction grating (12) is greater than a width of the injection waveguide (11), and wherein the width of the emission waveguide (31) is at least equal to the extraction length $l_{tot,rl}$ of the lateral diffraction grating (12).

10. The optoelectronic emitter (1) as claimed in any one of claims 1 to 9, wherein the width of the injection waveguide (11) is less than or equal to 1 $\mu$m, and the widths of the emission waveguide (31) and of the vertical diffraction grating (32) are respectively greater than or equal to 10 $\mu$m.

11. The optoelectronic emitter (1) as claimed in any one of claims 1 to 10, wherein the total length, called total extraction length $l_{tot,rv}$, of the vertical diffraction grating (32) is greater than or equal to 10 $\mu$m.

**12.** The optoelectronic emitter (1) as claimed in any one of claims 1 to 11, wherein the lateral diffraction grating (12) is formed by periodic indentations produced in the injection waveguide (11); or is formed by periodic studs located at a distance from the injection waveguide (11).

**13.** The optoelectronic emitter (1) as claimed in any one of claims 1 to 12, wherein the injection waveguide (11) has a longitudinal variation of at least one parameter representing its width according to a predefined function p, and the lateral diffraction grating (12) has a longitudinal variation of a pitch $\Lambda_{rl}$ of an arrangement of periodic structures (13) according to a predefined function q, with the functions p and q being predefined as a function of a predefined far-field target emission profile $S_{rl,c}(x)$ of light radiation extracted by the lateral diffraction grating (12) and of a predefined target emission angle $\varphi_{rl,c}$.

**14.** The optoelectronic emitter (1) as claimed in any one of claims 1 to 13, wherein the vertical diffraction grating (32) has a longitudinal variation of at least one dimensional parameter of periodic structures (33) according to a function that is predefined as a function of a predefined far-field target emission profile $Srv_{,c}(x)$ of light radiation extracted by the vertical diffraction grating (32) and of a predefined target emission angle $\varphi_{rv,c}$.

**15.** The optoelectronic emitter (1) as claimed in any one of claims 1 to 14, comprising an SOI-type photonic chip containing the lateral emission guiding structure (10), and the vertical emission guiding structure (30).

**Fig.1A**

**Fig.1B**

**Fig.2**

**Fig.3A**

**Fig.3B**

**Fig.3C**

**Fig.4A**

**Fig.4B**

**Fig.4C**

**Fig.4D**

**Fig.5A**

**Fig.5B**

**Fig.5C**

10 $S_{rl,c}(x) ; \varphi_{rl,c}$
$Cs_{ref} = \{ Pp_{gi} ; Pp_{rl} \}$

20 $\{ p_{rl}=p(x) ; \Lambda_{rl}=f(\beta ; p_{rl}(x) \} \Rightarrow \alpha_{rl}(x) \Rightarrow S_{rl}(x) = S_{rl,c}(x)$

30 $\varphi_{rl} = g( \Lambda_{rl} ; p_{rl} )|Csref$
$\Lambda_{rl} = h( p_{rl} )|Csref / \varphi_{rl} = \varphi_{rl,c} \Rightarrow \Lambda_{rl}=q(x)$

40 $Cs_{ref} = \{ \{ Pp_{gi} ; p_{rl}(x) \} ; \{ Pp_{rl} ; \Lambda_{rl}(x) \} \}$

**Fig.6A**

**Fig.6B**

Fig.7A

Fig.7B

Fig.7C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2021130149 A1

**Littérature non-brevet citée dans la description**

- **HULME et al.** Fully integrated hybrid silicon two dimensional beam scanner. *Opt. Express*, 2015, vol. 23 (5), 5861-5874
- **INOUE et al.** Demonstration of a new optical scanner using silicon photonics integrated circuit. *Opt. Express*, 2019, vol. 27 (3), 2499-2508
- **MEKIS et al.** A Grating-Coupler-Enabled CMOS Photonics Platform. *IEEE Journal of Selected Topics in Quantum Electronics*, May 2011, vol. 17 (3), 597-608
- **ZHAO et al.** Design principles of apodized grating couplers. *Journal of Lightware Technology*, 2020, vol. 38 (16), 4435-4446
- Grating-Coupler-Enabled CMOS Photonics Platform. **MEKIS et al.** Journal of Selected Topics in Quantum Electronics. IEEE, May 2011, vol. 17, 597-608